# FASCICULE DE BREVET EUROPEEN

(11) **EP 2 805 372 B1**
(45) Date de publication et mention de la délivrance du brevet: **16.09.2015**
(21) Numéro de dépôt: 12816766.5
(22) Date de dépôt: 21.12.2012
(51) Int. Cl.: H01M 8/10

(54) **PROCEDE DE PREPARATION D'UNE MEMBRANE ECHANGEUSE DE PROTONS POUR PILE A COMBUSTIBLE PAR COULEE EVAPORATION**
VERFAHREN ZUR HERSTELLUNG EINER PROTONENAUSTAUSCHMEMBRAN FÜR EINE BRENNSTOFFZELLE MITTELS LÖSUNGSMITTELGUSS
METHOD FOR THE PRODUCTION OF A PROTON EXCHANGE MEMBRANE FOR A FUEL CELL BY MEANS OF SOLVENT-CASTING

(30) Priorité: 18.01.2012 FR 1250518
(43) Date de publication de la demande: 26.11.2014
(73) Titulaire: Commissariat à l'Énergie Atomique et aux Énergies Alternatives, 75015 Paris (FR)
(72) Inventeur: MOLMERET, Yannick, F-38320 Eybens (FR); MORIN, Arnaud, F-38100 Grenoble (FR)
(74) Mandataire: Cabinet Laurent & Charras
(86) Numéro de dépôt international: PCT/FR2012/053044
(87) Numéro de publication internationale: WO 2013/107956

(56) Documents cités:
- EP-A1- 1 449 886
- WO-A1-97/37396
- WO-A1-99/40025
- BOOR SINGH ET AL: "Polymer Electrolytes Based on Room Temperature Ionic Liquid: 2,3-Dimethyl-1-octylimidazolium Triflate", THE JOURNAL OF PHYSICAL CHEMISTRY B, vol. 109, no. 34, 1 septembre 2005 (2005-09-01), pages 16539-16543, XP055039948, ISSN: 1520-6106, DOI: 10.1021/jp051673c

## Description

### DOMAINE DE L'INVENTION

La présente invention concerne un procédé de préparation par coulée évaporation d'une membrane échangeuse de protons pour PEMFC (selon l'acronyme anglo-saxon « *Proton Exchange Membrane Fusel Cell* » ou pile à combustible à membrane échangeuse de protons).

Le domaine d'utilisation de l'invention concerne principalement les générateurs de courant, dont le principe de fonctionnement repose sur la conversion de l'énergie chimique en énergie électrique et en chaleur par réaction électrochimique notamment entre l'hydrogène et l'oxygène.

### ETAT ANTERIEUR DE LA TECHNIQUE

Typiquement, une pile à combustible à membrane échangeuse de protons (PEMFC) comprend une anode à laquelle le combustible, H₂, est oxydé en protons et électrons, et une cathode à laquelle l'oxygène est réduit en eau selon les réactions suivantes :

H₂ → 2H⁺ + 2 e- (oxydation à l'anode)

4 H⁺ + 4 e⁻ + O₂ → 2 H₂O (réduction à la cathode)

Dans une PEMFC, les électrodes sont séparées par un électrolyte, ou membrane échangeuse de protons, l'assemblage membrane/électrodes (AME) constituant le coeur de la pile. Cette membrane échangeuse de protons constitue un milieu isolant électronique mais conducteur protonique. En d'autres termes, la membrane permet d'assurer le passage des protons de l'anode à la cathode tout en empêchant les gaz et les électrons de passer d'une électrode à l'autre. En outre, des collecteurs de courant assurent le transfert des électrons de l'électrode jusqu'au circuit externe.

Deux types de membranes sont principalement employés dans les piles commerciales. Le premier type est constitué d'un polymère échangeur cationique, tel que le Nafion^{®} (Dupont) ou l'Aquivion^{®} (Solvay-Solexis) qui sont des copolymères perfluorés comprenant des groupements sulfonates SO₃⁻, appelés ionomères perfluorosulfonés. La conductivité protonique est assurée par un groupement acide fort, SO₃H, très hydrophile, et se dissociant aisément dans l'eau pour former des espèces chargées susceptibles de se déplacer. Dans ces membranes, la conductivité protonique est assurée par les espèces H₃O⁺ et H₅O₂⁺ (protons solvatés) et augmente avec la quantité d'eau qui constitue le milieu dans lequel ces espèces se déplacent.

Ces membranes constituées d'un polymère échangeur cationique nécessitent la présence d'eau afin d'obtenir une conductivité protonique suffisante pour atteindre les performances requises pour les différentes applications, à savoir généralement supérieure à 10⁻² S.cm⁻¹. Or, la quantité d'eau dans la membrane dépend, entre autre et fortement, de l'humidité relative d'entrée des gaz. Ceci implique donc la présence d'auxiliaires d'humidification des gaz d'entrée, et en conséquence, des complexifications et une diminution de la fiabilité du système associé à la PEMFC. Ce problème est encore plus aigu à haute température. En effet, l'énergie et la quantité d'eau nécessaires à l'hydratation des gaz d'entrée augmentent avec la température et deviennent rédhibitoires pour le rendement du système, en particulier au-dessus de 90°C. En outre, les propriétés mécaniques de ces membranes, et par conséquent, la durabilité de la membrane diminuent fortement lorsque la température augmente, en particulier au-delà de 90°C,. Enfin, leur perméabilité aux gaz augmente également significativement avec la température, conduisant à une accélération des mécanismes de vieillissement chimique des membranes et électrochimique du catalyseur des électrodes. Toutefois, ces membranes présentent l'avantage de pouvoir permettre à la PEMFC d'être démarrée très rapidement à température ambiante et même pour des températures inférieures à 0°C, jusqu'à -10°C.

Ainsi, les membranes à base d'ionomère perfluorosulfoné sont généralement employées de façon nominale entre 0 et 80°C.

Le second type de membranes utilisées dans les piles commerciales concerne les membranes à base de de polybenzimidazole (PBI) et d'acide phosphorique H₃PO₄ (He R, Li Q, Xiao G, Bjerrum NJ « croton conductivity of phosphoric acid doped polybenzimidazole and its composites with inorganic proton conductors », J. of Memb. Sci., 226, 2003, 169-184). Ces membranes peuvent être fabriquées par imprégnation d'acide phosphorique par exemple, par immersion pendant 7 jours avant d'être séchées pendant 24 heures.

Le document US 2008/031746 décrit un procédé de préparation d'une membrane à base de PBI. Selon ce procédé, un polymère de type polyazole est tout d'abord dissous dans une solution anhydre d'acide fort. La solution résultante est ensuite déposée sur un substrat, puis gélifiée par mise en contact avec de l'eau. La membrane est obtenue après dopage du gel ainsi obtenu, avec de l'acide phosphorique ou de l'acide sulfurique. Dans ce procédé, le solvant est un acide fort qui permet donc de solubiliser le polyazole. Cet acide fort est éliminé lors du dopage du gel. La membrane est donc constituée d'un polyazole imbibé d'un acide inorganique qui est soit de l'acide phosphorique, soit de l'acide sulfurique.

L'association PBI/H₃PO₄ permet d'augmenter la température d'utilisation de la PEMFC jusqu'à 220°C du fait de la stabilité chimique du PBI et de la nature de l'électrolyte qui peut conduire les protons en l'absence d'eau. Ainsi, dans la mesure où le mécanisme de conduction protonique ne nécessite pas d'eau, il est également possible d'utiliser des gaz secs. Néanmoins, l'énergie d'activation de ce mécanisme de conduction protonique est élevée. En conséquence, la conductivité de ces membranes diminue fortement à des températures inférieures à 120°C. Elles sont même inutilisables aux températures inférieures à 40°C en raison de la cristallisation de l'acide phosphorique. La pile doit donc être préchauffée avant utilisation. Ces membranes requièrent en outre une période de rodage d'une centaine d'heure.

Ainsi, les membranes PBI/H₃PO₄ sont généralement employées de façon nominale entre 120 et 180 °C.

Typiquement, en fonctionnement nominal, 40 à 50 % de l'énergie produite par une PEMFC est constitué de chaleur. Par conséquent, lors de son fonctionnement en tant que générateur électrique, une PEMFC doit être refroidie. Toutefois, plus l'écart de température entre la pile et la température ambiante est grand, plus il est aisé de dissiper la chaleur produite. En d'autres termes, le système de refroidissement est plus simple et moins volumineux lorsque la pile fonctionne à haute température. Ceci est d'autant plus important pour l'application transport pour laquelle les contraintes en termes de compacité et de fiabilité du système sont les plus drastiques. La température interne des moteurs thermiques étant de l'ordre de 110°C cette température de fonctionnement est bien souvent visée pour cette application, et même pour l'application cogénération.

Il est également à noter que l'hydrogène utilisé en tant que combustible peut comprendre du monoxyde de carbone susceptible de polluer les catalyseurs à base de platine par adsorption. Or, l'adsorption du monoxyde de carbone sur le platine diminue lorsque la température augmente, en particulier au-delà de 80°C ([Baschuk JJ, Li X. « Carton monoxide poisoning of proton exchange membrane fuel cells » Int. J. Energy Res. 2001, 25, 695-713). Par conséquent, une PEMFC fonctionnant à une température supérieure à 80°C pourrait également contribuer à la diminution de l'adsorption du monoxyde de carbone sur le catalyseur.

En conséquence, il serait avantageux de pouvoir augmenter la température de fonctionnement des PEMFC dont la membrane est à base d'ionomère perfluorosulfoné et de diminuer la température de fonctionnement des PEMFC dont la membrane est à base de PBI/H₃PO₄ pour de nombreuses applications afin que la température de fonctionnement nominale se situe entre 100 et 130°C. Toutefois, pour la plupart des applications, il est généralement souhaitable de disposer d'un système dont la PEMFC est opérationnelle sans apport d'énergie extérieur et rapidement, même à température ambiante.

Le développement d'une membrane pouvant fonctionner à un faible taux d'humidification et dans une gamme de température comprise entre 0 et 130 °C permettrait ainsi de s'affranchir de certains des problèmes de l'art antérieur.

Le Demandeur a mis au point un procédé de préparation d'une membrane polymérique pour PEMFC pouvant être utilisée dans une vaste gamme de températures par rapport aux membranes de l'art antérieur, en particulier celles comprenant de l'acide phosphorique.

### EXPOSE DE L'INVENTION

Le procédé objet de l'invention permet d'obtenir une membrane dopée par un acide par coulée évaporation. Contrairement aux procédés de l'art antérieur, ce procédé permet de doper la membrane avant la coulée de la membrane et l'évaporation des solvants.

En outre, l'invention permet l'utilisation de superacides en tant que dopant malgré leur caractère très oxydant.

Le document EP 1 449 886 décrit un procédé de préparation d'une membrane polymérique comprenant un polymère aromatique et un sel fondu. Ce polymère aromatique est préalablement obtenu par polycondensation entre des monomères présentant des fonctions alcool et des fonctions halogènes. A l'issue de cette réaction, le polymère aromatique est un polyéther sulfoné dépourvu de fonctions halogènes étant donné qu'elles ont réagi avec les fonctions alcools.

Plus précisément, la présente invention concerne un procédé de préparation d'une membrane échangeuse de protons pour pile à combustible consistant avantageusement:
- à mettre en solution dans un solvant un polymère choisi dans le groupe comprenant les polymères dont au moins un monomère présente un groupement fluoré de type tétrafluoroéthylène (TFE), hexafluoropropène (HFP), ou fluorure de vinylidène (VDF) ;
- à ajouter au moins un superacide dans la solution de polymère ;
- à mélanger la solution ainsi obtenue ;
- à couler la solution contenant le polymère et le superacide sur un substrat ;
- à évaporer le solvant ;
- à récupérer la membrane ;
ledit solvant étant chimiquement stable en présence du superacide.

En fonction du rapport massique entre le superacide et le polymère, la membrane peut se présenter sous la forme d'un film autosupporté. Il peut également s'agir d'un gel.

Indépendamment de sa forme, elle présente des propriétés mécaniques compatibles avec une utilisation en pile à combustible.

Toutefois, la membrane se présente avantageusement sous forme de film autosupporté dont l'épaisseur peut être comprise entre 10 et 100 micromètres, le polymère étant gonflé par le superacide.

De manière générale, le substrat permet l'étalement de la solution. Il est donc stable chimiquement au contact des solvants et du superacide, au moins à la température d'évaporation du solvant.

Le substrat peut être constitué par un film polymère, éventuellement une plaque métallique. Il s'agit préférentiellement, d'une plaque de verre.

Les polymères dont le(s) monomère(s) présente(nt) des groupements fluorés permettent d'obtenir un film présentant de bonnes propriétés mécaniques. En outre, ils sont très stables vis-à-vis de l'oxydation possible par les superacides mais également lors du fonctionnement en pile.

Ce polymère fluoré peut être un (co)polymère obtenu à partir d'au moins un monomère tétrafluoroéthylène (TFE), hexafluoropropène (HFP), fluorure de vinylidène (VDF). Il peut notamment être choisi dans le groupe comprenant les poly(VDF-co-HFP) (PVDF-HFP), les polymères perfluoroalkoxy (PFA), les poly(éthylène-co-tétrafluoroéthyléne) (polyETFE), ou les poly perfluoro(éthylène-propylène) (polyFEP).

Lors de la première étape du procédé consistant à mettre en solution le polymère dans un solvant, la concentration de ce dernier peut avantageusement être comprise entre 60g/l et 400 g/l, plus avantageusement encore de l'ordre de 300 g/l.

La concentration molaire dépend du grade de polymère choisi, ainsi que de sa masse molaire. Dans le cas du PVDF-HFP (Mw = 400000), la concentration molaire peut être comprise entre 0,001 mol/l et 0,00015 mol/l, avantageusement 0,00075 mol/l.

Par superacide, on entend un composé chimique plus acide que l'acide sulfurique pur. En d'autres termes, il s'agit ici d'un acide dont le pKa est inférieur à -3. De manière préférentielle, il s'agit de superacides organiques présentant des groupements fluorés.

Il peut notamment s'agir d'un composé choisi dans le groupe comprenant l'acide disulfurique (pKa = -3,1), l'acide fluorosulfurique (pKa = -10), l'acide trifluorométhane sulfonique (TFSA) (pKa = -14,9), l'acide fluoroantimonique (pKa = - 25).

Le superacide peut être directement incorporé dans la solution de polymère, en particulier lorsqu'il se présente sous forme liquide.

En outre, selon un autre mode de réalisation particulier, il peut être mis préalablement en solution dans un solvant chimiquement stable en présence dudit superacide. Ce solvant peut être identique à celui utilisé dans la première étape du procédé consistant à mettre en solution le polymère.

Dans ce cas, le rapport en poids entre le superacide et le solvant dans lequel il est préalablement mis en solution est ajusté selon la nature du solvant et/ou du superacide. Dans le cas de l'acide TFSA, ce rapport peut être compris entre 0,02 et 0,5, préférentiellement compris entre 0,1 et 0,2.

De manière générale, les solvants utilisés dans le procédé de l'invention sont chimiquement stables en présence d'un superacide. Ils peuvent avantageusement être choisis dans le groupe comprenant les solvants organiques polaires tels que : DMF (diméthylformamide), DMSO (diméthylsulfoxyde), acétonitrile, diméthylsulfone. Il peut également s'agir d'un mélange de solvants.

Selon un mode de réalisation particulièrement préféré, le solvant est le diméthylsulfoxyde (DMSO).

Selon le mode de réalisation particulier comprenant la mise en solution préalable du superacide dans un solvant, il peut être judicieux voire nécessaire de refroidir la solution, cette étape de mélange/dilution pouvant être exothermique.

L'évaporation des solvants est préférentiellement réalisée par chauffage du substrat sur lequel est coulée la solution contenant le polymère et le superacide, à une température avantageusement comprise entre 25 et 150 °C, et encore plus avantageusement de l'ordre de 80°C. Les conditions d'évaporation sont déterminées en fonction de la nature du solvant, de manière à assurer une évaporation lente et homogène.

Afin d'éviter les problèmes liés à l'acidité du superacide, et notamment sa réactivité vis-à-vis des solvants, le procédé objet de l'invention peut mettre en oeuvre, lors de la préparation de la membrane, l'utilisation de l'anhydride de superacide ou d'un sel de superacide.

Lorsque le superacide se présente sous la forme de l'anhydride de superacide, ce dernier est hydrolysé après évaporation des solvants, de préférence par action de l'humidité de l'air sur la membrane imbibée d'anhydride de superacide. L'hydrolyse de l'anhydride de superacide peut ainsi être accomplie généralement en moins d'une heure. Selon un autre mode de réalisation particulier, l'hydrolyse peut également être réalisée par immersion de la membrane dans une solution aqueuse.

Lorsque le superacide se présente sous la forme d'un sel de superacide, ce dernier est avantageusement un sel d'alcalin, d'alcalino terreux, d'ammonium ou leurs mélanges.

Lors de la préparation de la membrane, et après évaporation des solvants, le sel de superacide est acidifié par immersion de la membrane de polymère imbibé de sel de superacide dans une solution contenant un acide dont le pKa est inférieur à 0, avantageusement inférieur à -3.

Cette solution acide est avantageusement une solution aqueuse dont la concentration en acide est comprise entre 0,5 et 10 mol/l, plus avantageusement encore entre 1 et 5 mol/l.

Le temps de séjour de la membrane dans la solution acide doit être le plus court possible avant d'éviter l'élution du superacide. Il est avantageusement compris entre 10 secondes et 60 minutes, plus avantageusement encore entre 30 secondes et 2 minutes.

La présente invention concerne également une membrane échangeuse de protons imbibée de superacide et obtenue par le procédé décrit ci-avant.

Elle concerne également une pile à combustible comprenant ladite membrane échangeuse de protons.

Le polymère de la membrane imbibée de superacide assure la tenue mécanique de la membrane. Il ne contribue pas à la conductivité protonique de la membrane. Selon le type de membrane utilisée, il est donc envisageable de sélectionner le polymère en fonction des propriétés mécaniques qu'il présente, sans pour autant modifier les propriétés de conductivité de la membrane.

De manière préférée, la conductivité protonique de la membrane échangeuse de protons préparée selon le procédé de l'invention est donc totalement assurée par le dopage au moyen du superacide. Le polymère mis en oeuvre est donc avantageusement dépourvu de groupements présentant un proton acide.

L'invention et les avantages qui en découlent ressortiront mieux des exemples suivants donnés afin d'illustrer l'invention et non de manière limitative.

### EXEMPLES DE REALISATION DE L'INVENTION

### • Préparation d'une membrane PVDF-HFP + TFSA selon l'invention.

Une membrane de 120 cm² est préparée comme ci après :
600 mg de polymère PVDF-HFP (référence 427160 de chez Sigma-Aldrich) sont dissous dans 2 ml de DMSO dans un pilulier, sous agitation lente et à une température de 40°C. Afin que la dissolution soit complète, le mélange est laissé 8 heures sous agitation.

Parallèlement, 0,5g de TFSA (soit 0,3 mL environ) sont mélangés progressivement afin d'éviter tout échauffement à 2 mL de DMSO, dans un pilulier, sous agitation lente.

La solution superacide/solvant est ensuite ajoutée progressivement à la solution polymère/solvant préalablement refroidie. La solution obtenue est agitée lentement pendant 15 minutes afin de l'homogénéiser.

Le contenu du pilulier est alors versé sur une plaque de verre (ici une boîte de pétri, de surface 120 cm²) et est placé sur une plaque chauffée à 80°C.

Après 12 heures de séchage, la membrane obtenue est retirée de la plaque et peut être stockée.

La membrane obtenue dans ces conditions présente une épaisseur de 80 à 90 micromètres. Il n'est cependant pas exclu qu'il puisse rester des traces de solvant à l'intérieur.

La membrane est translucide.

### • Préparation d'une membrane PVDF-HFP + Anhydride de TFSA

Cette membrane est préparée selon le même procédé que ci-dessus, en prenant la précaution de se placer en atmosphère neutre et anhydre afin d'éviter l'hydrolyse de l'anhydride avant la fin de la fabrication de la membrane.

La membrane obtenue est opaque, et doit être activée, en hydrolysant le Tf2 (anhydride du TFSA). Pour cela, la membrane est placée à l'air ambiant, afin que l'humidité présente assure une hydrolyse lente du Tf2.

Après une heure si la membrane est fine (de l'ordre de 40 micromètres) ou jusqu'à 4h si la membrane est épaisse (entre 100 et 120 micromètres), la membrane est devenue translucide et peut être montée dans une pile à combustible.

### • Mesures de conductivité ex-situ sur des membranes PVDF-HFP dopées avec un superacide

Différentes membranes à base de PVDF-HFP ont été fabriquées et dopées à l'aide soit de TFSA, soit de Tf2 (qui a ensuite été hydrolysé). Les mesures de conductivité sont réalisées ex-situ, c'est-à-dire à l'air ambiant, soit T = 25°C et humidité relative 50%. Les valeurs de conductivité ont été reportées dans le tableau ci-après.

| Composition | CEI (mEq/g) | Epaisseur (µm) | Conductivité (mS/cm) |
|---|---|---|---|
| PVDF-HFP + Tf2 | 4,12 | 110 | 40 |
| PVDF-HFP + TFSA | 2 | 30 | 12 |
| PVDF-HFP + Tf2 | 2 | 60 | 12 |
| PVDF-HFP + TFSA | 3 | 90 | 17 |
| PVDF-HFP + Tf2 | 3 | 90 | 30 |
| PVDF-HFP + Tf2 | 3 | 90 | 23 |

La CEI correspond à la capacité d'échange ionique de la membrane. Elle est exprimée en mEq/g (milliéquivalents par rapport au poids en gramme de la membrane). Elle est avantageusement comprise entre 0,5 et 5 mEq/g, encore plus avantageusement entre 2 et 3 mEq/g.

En effet, la forme sous laquelle se présente la membrane peut dépendre de sa CEI. Pour une CEI comprises entre 0,5 et 5 mEq/g, la membrane se présente sous forme d'un film autosupporté. En revanche, au-delà de 5 mEq/g, il s'agit généralement d'un gel.

A titre d'exemple, le rapport massique (établi pour l'acide TFSA) Masse_{TFSA}/Masse_{PVDF} est de 0,08 pour une CEI de 0.5 mEq/g, et de 1,5 pour une CEI de 4 mEq/g. Pour une CEI plus importante, ce rapport est donc plus élevé. Par exemple, dans le cas d'une CEI de 5,5 mEq/g, le rapport massique est de 4,7.

La conductivité protonique de la membrane obtenu selon le procédé objet de l'invention peut être mesurée selon les techniques connues de l'homme du métier (voir notamment : Lee et al. Ind. Eng. Chem. Res. 2005, 44, 7617-7626 ; ou Casciola et al. Journal of Power Sources 20066, 162, 141-145). De manière générale et sauf indication contraire, la conductivité est mesurée à la température ambiante (25°C) et à 50 % d'humidité relative. Elle est mesurée dans le sens de l'épaisseur de la membrane.

## Revendications

1. Procédé pour la préparation d'une membrane échangeuse de protons pour pile à combustible consistant :
- à mettre en solution dans un solvant un polymère choisi dans le groupe comprenant les polymères dont au moins un monomère présente un groupement fluoré ;
- à ajouter au moins un superacide dans la solution de polymère ;
- à mélanger la solution ainsi obtenue ;
- à couler la solution contenant le polymère et le superacide sur un substrat ;
- à évaporer le solvant ;
- à récupérer la membrane ;
ledit solvant étant chimiquement stable en présence du superacide.

2. Procédé pour la préparation d'une membrane échangeuse de protons pour pile à combustible selon la revendication 1, ***caractérisé* en ce que** le solvant est choisi dans le groupe comprenant le diméthylformamide, le diméthylsulfoxyde, l'acétonitrile, et le diméthylsulfone.

3. Procédé pour la préparation d'une membrane échangeuse de protons pour pile à combustible selon la revendication 1 ou 2, ***caractérisé* en ce que** préalablement à son addition, le superacide est mis en solution dans un solvant.

4. Procédé pour la préparation d'une membrane échangeuse de protons pour pile à combustible selon l'une des revendications 1 à 3, ***caractérisé* en ce que** le superacide se présente sous la forme de l'anhydride de superacide.

5. Procédé pour la préparation d'une membrane échangeuse de protons pour pile à combustible selon la revendication 4, ***caractérisé* en ce que** l'anhydride de superacide est hydrolysé après évaporation des solvants.

6. Procédé pour la préparation d'une membrane échangeuse de protons pour pile à combustible selon l'une des revendications 1 à 3, ***caractérisé* en ce que** le superacide se présente sous la forme d'un sel de superacide.

7. Procédé pour la préparation d'une membrane échangeuse de protons pour pile à combustible selon la revendication 6, ***caractérisé* en ce que** la membrane comprenant un polymère imbibé de sel de superacide est plongée dans une solution concentrée en acide dont le pKa est inférieur à 0.

8. Procédé pour la préparation d'une membrane échangeuse de protons pour pile à combustible selon l'une des revendications 1 à 7, ***caractérisé* en ce que** les solvants sont évaporés par chauffage du substrat à une température comprise entre 25 et 150°C.

9. Procédé pour la préparation d'une membrane échangeuse de protons pour pile à combustible selon l'une des revendications 1 à 8, ***caractérisé* en ce que** le polymère est choisi dans le groupe comprenant le poly(VDF-co-HFP) (PVDF-HFP), les polymères perfluoroalkoxy (PFA), les poly(éthylène-co-tétrafluoroéthyléne) (polyETFE), et les poly perfluoro(éthylène-propylène) (polyFEP).

10. Procédé pour la préparation d'une membrane échangeuse de protons pour pile à combustible selon la revendication 1, ***caractérisé* en ce que** le monomère présentant un groupement fluoré est choisi dans le groupe comprenant le tétrafluoroéthylène (TFE), l'hexafluoropropène (HFP), et le fluorure de vinylidène (VDF).

11. Procédé pour la préparation d'une membrane échangeuse de protons pour pile à combustible selon la revendication 6, ***caractérisé* en ce que** le superacide se présente sous la forme d'un sel choisi dans le groupe comprenant les sels d'alcalin, d'alcalino terreux, d'ammonium, et leurs mélanges

12. Procédé pour la préparation d'une membrane échangeuse de protons pour pile à combustible selon la revendication 8, ***caractérisé* en ce que** la température de chauffage est de 80°C.

13. Procédé pour la préparation d'une membrane échangeuse de protons pour pile à combustible selon l'une des revendications 1 à 12, ***caractérisé* en ce que** le solvant est le diméthylsulfoxyde.

## Patentansprüche

1. Verfahren zum Herstellen einer Protonenaustauschmembran für eine Brennstoffzelle, darin bestehend:
- in einem Lösungsmittel ein Polymer zur Lösung zu bringen, das aus der Gruppe ausgewählt ist, die Polymere umfasst, von denen mindestens ein Monomer eine fluorierte Gruppe aufweist;
- mindestens eine Supersäure zu der Polymerlösung zuzugeben;
- die so erhaltene Lösung zu mischen;
- die das Polymer und die Supersäure enthaltende Lösung auf ein Substrat zu gießen;
- das Lösungsmittel zu verdampfen;
- die Membran zu entnehmen;
wobei das Lösungsmittel im Beisein der Supersäure chemisch stabil ist.

2. Verfahren zum Herstellen einer Protonenaustauschmembran für eine Brennstoffzelle nach Anspruch 1, **dadurch gekennzeichnet, dass** das Lösungsmittel aus der Gruppe ausgewählt ist, die Dimethylformamid, Dimethylsulfoxid, Acetonitril und Dimethylsulfon umfasst.

3. Verfahren zum Herstellen einer Protonenaustauschmembran für eine Brennstoffzelle nach Anspruch 1 oder 2, **dadurch gekennzeichnet, dass** die Supersäure vor ihrer Zugabe in einem Lösungsmittel zur Lösung gebracht wird.

4. Verfahren zum Herstellen einer Protonenaustauschmembran für eine Brennstoffzelle nach einem der Ansprüche 1 bis 3, **dadurch gekennzeichnet, dass** sich die Supersäure in Form von Supersäureanhydrid darstellt.

5. Verfahren zum Herstellen einer Protonenaustauschmembran für eine Brennstoffzelle nach Anspruch 4, **dadurch gekennzeichnet, dass** das Supersäureanhydrid nach dem Verdampfen der Lösungsmittel hydrolysiert wird.

6. Verfahren zum Herstellen einer Protonenaustauschmembran für eine Brennstoffzelle nach einem der Ansprüche 1 bis 3, **dadurch gekennzeichnet, dass** sich die Supersäure in Form eines Supersäuresalzes darstellt.

7. Verfahren zum Herstellen einer Protonenaustauschmembran für eine Brennstoffzelle nach Anspruch 6, **dadurch gekennzeichnet, dass** die Membran, die ein mit Supersäuresalz getränktes Polymer umfasst, in eine säurekonzentrierte Lösung eingetaucht wird, deren pKa unter 0 liegt.

8. Verfahren zum Herstellen einer Protonenaustauschmembran für eine Brennstoffzelle nach einem der Ansprüche 1 bis 7, **dadurch gekennzeichnet, dass** die Lösungsmittel durch Erwärmen des Substrats auf eine Temperatur zwischen 25 und 150°C verdampft werden.

9. Verfahren zum Herstellen einer Protonenaustauschmembran für eine Brennstoffzelle nach einem der Ansprüche 1 bis 8, **dadurch gekennzeichnet, dass** das Polymer aus der Gruppe ausgewählt ist, die Poly(VDF-co-HFP) (PVDF-HFP), Perfluoralkoxypolymere (PFA), Poly(ethylen-co-Tetrafluorethylen) (polyEFTE) und Polyperfluor(ethylen-Propylen) (polyFEP) umfasst.

10. Verfahren zum Herstellen einer Protonenaustauschmembran für eine Brennstoffzelle nach Anspruch 1, **dadurch gekennzeichnet, dass** das Monomer, das eine fluorierte Gruppe aufweist, aus der Gruppe ausgewählt ist, die Tetrafluorethylen (TFE), Hexafluorpropen (HFP) und Vinylidenfluorid (VDF) umfasst.

11. Verfahren zum Herstellen einer Protonenaustauschmembran für eine Brennstoffzelle nach Anspruch 6, **dadurch gekennzeichnet, dass** sich die Supersäure in Form eines Salzes darstellt, das aus der Gruppe ausgewählt ist, die Alkali-, Erdalkali-, Ammoniumsalze und deren Gemische umfasst.

12. Verfahren zum Herstellen einer Protonenaustauschmembran für eine Brennstoffzelle nach Anspruch 8, **dadurch gekennzeichnet, dass** die Erwärmungstemperatur 80°C beträgt.

13. Verfahren zum Herstellen einer Protonenaustauschmembran für eine Brennstoffzelle nach einem der Ansprüche 1 bis 12, **dadurch gekennzeichnet, dass** das Lösungsmittel Dimethlysulfoxid ist.

## Claims

1. Method for preparing a proton-exchange membrane for a fuel cell comprising:
- placing in solution in a solvent a polymer selected from the group comprising the polymers having at least one monomer exhibiting fluorinated groups;
- adding at least one superacid to the polymer solution;
- mixing the solution thus obtained;
- casting the solution containing the polymer and the superacid on a substrate;
- evaporating the solvent;
- recovering the membrane;
said solvent being chemically stable in the presence of the superacid.

2. The method for preparing a proton exchange membrane for a fuel cell of claim 1, ***characterized* in that** the solvent is selected from the group comprising dimethylformamide, dimethylsulfoxide, acetonitrile, and dimethylsulfone.

3. The method for preparing a proton exchange membrane for a fuel cell of claim 1 or 2, ***characterized* in that** prior to its addition, the superacid is placed in solution in a solvent.

4. The method for preparing a proton exchange membrane for a fuel cell of any of claims 1 to 3, ***characterized* in that** the superacid is in the form of the anhydride of the superacid.

5. The method for preparing a proton exchange membrane for a fuel cell of claim 4, ***characterized* in that** the superacid anhydride is hydrolyzed after evaporation of the solvents.

6. The method for preparing a proton exchange membrane for a fuel cell of any of claims 1 to 3, ***characterized* in that** the superacid is in the form of a superacid salt.

7. The method for preparing a proton exchange membrane for a fuel cell of claim 6, ***characterized* in that** the membrane comprising a polymer soaked with superacid salt is dipped into a concentrated solution of an acid having a pKa smaller than 0.

8. The method for preparing a proton exchange membrane for a fuel cell of any of claims 1 to 7, ***characterized* in that** the solvents are evaporated by heating of the substrate up to a temperature in the range from 25 to 150 °C.

9. The method for preparing a proton exchange membrane for a fuel cell of any of claims 1 to 8, ***characterized* in that** the polymer is selected from the group comprising poly(VDF-co-HFP) (PVDF-HFP), perfluoroalkoxy (PFA) polymers, poly(ethylene-co-tetrafluoroethylene) (polyETFE), and poly perfluoro(ethylenepropylene) (polyFEP).

10. The method for preparing a proton exchange membrane for a fuel cell of claim 1, ***characterized* in that** the monomer having a fluorinated group is selected from the group comprising tetrafluoroethylene (TFE), hexafluoropropene (HFP), and vinylidene fluoride (VDF).

11. The method for preparing a proton exchange membrane for a fuel cell of claim 6, ***characterized* in that** the superacid appears in the form of a salt selected from the group comprising alkaline, alkaline earth, ammonium salts, and mixtures thereof.

12. The method for preparing a proton exchange membrane for a fuel cell of claim 8, ***characterized* in that** the heating temperature is 80 °C.

13. The method for preparing a proton exchange membrane for a fuel cell of any of claims 1 to 12, ***characterized* in that** the solvent is dimethylsulfoxide.
